Europäisches Patentamt

European Patent Office

Office européen des brevets

(11) Numéro de publication: **0 592 577 B1**

# (12) FASCICULE DE BREVET EUROPEEN

(45) Date de publication du fascicule du brevet: **11.10.95**

(51) Int. Cl.⁶: **A01N 37/06**, A01N 65/00,
//(A01N37/06,37:06,37:02,35:06,
27:00),(A01N65/00,37:06,37:02)

(21) Numéro de dépôt: **92915124.9**

(22) Date de dépôt: **01.07.92**

(86) Numéro de dépôt internationale :
**PCT/FR92/00619**

(87) Numéro de publication internationale :
**WO 93/00812 (21.01.93 93/03)**

(54) **COMPOSITIONS ANTI-OVIPOSITION COMPRENANT UN ACIDE GRAS ET/OU UN ALKYL ESTER D'ACIDE GRAS ET EVENTUELLEMENT UN MONOTERPENE.**

(30) Priorité: **02.07.91 FR 9108241**
**11.02.92 FR 9201506**

(43) Date de publication de la demande:
**20.04.94 Bulletin 94/16**

(45) Mention de la délivrance du brevet:
**11.10.95 Bulletin 95/41**

(84) Etats contractants désignés:
**AT BE CH DE DK ES FR GB GR IT LI LU MC NL SE**

(56) Documents cités:
DE-A- 3 734 657
FR-A- 2 577 385
FR-A- 2 638 326

**NATURWISSENSCHAFTEN vol. 78, no. 3, Mars 1991, BERLIN, DE; pages 132 - 133 D.THIERY ET AL.: 'Identification of an Oviposition-Deterring Pheromone in the Eggs of the European Corn Borer'**

(73) Titulaire: **INSTITUT NATIONAL DE LA RECHERCHE AGRONOMIOUE**
**147, rue de l'Université**
**F-75341 Paris Cédex 07 (FR)**

Titulaire: **CENTRE NATIONAL DE LA RECHERCHE SCIENTIFIOUE (CNRS)**
**3 rue Michel Ange**
**F-75794 Paris Cédex 16 (FR)**

(72) Inventeur: **THIERY, Denis**
**21,rue des Plantes**
**F-75014 Paris (FR)**
Inventeur: **GABEL, Bruno**
**Malinovského 84**
**81105 Bratislava 1 (CS)**

(74) Mandataire: **Ores, Irène et al**
**CABINET ORES**
**6, Avenue de Messine**
**F-75008 Paris (FR)**

EP 0 592 577 B1

JOURNAL OF CHEMICAL ECOLOGY vol. 10, no. 1, 1984, NEW YORK, US; pages 145 - 151 Y.-S. HWANG ET AL.: 'Structure-Activity Relationship of Unsaturated fatty acids as Mosquito ovipostional Repellents'

CHEMICAL ABSTRACTS, vol. 85, no. 9, 30 Août 1976, Columbus, Ohio, US; abstract no. 59941r, K.OSHIMA: 'Why do adzuki bean weevils avoid oviposited adzuki beans?'

ENTOMOLOGIA EXPERIMENTALIS ET APPLICATA vol. 41, 1986, DORDRECHT, NL pages 139 - 146 J.W.KLIJNSTRA: 'The effect of an oviposi tion deterring pheromone on egglaying in PIERIS BRASSICAE'

JOURNAL OF APPLIED ENTOMOLOGY vol. 113, no. 2, 1992, HAMBURG, DE; pages 153 - 158 B.GABEL: 'Tansy flowers attract European grapevine moth females LOBESIA BOTRANA Den. & Schiff. ( Lep., Tortricidae)'

BIOLOGICAL ABSTRACTS vol. 73, no. 8 , 1982, Philadelphia, PA, US; abstract no. 52764, G.J.BREWER ET AL.: 'A feeding deterrent effect of a water extract of tansy (TANACETUM VULGARE, Compositae) on 3 lepidopterous larvae'

JOURNAL OF CHEMICAL ECOLOGY vol. 7, no. 1, 1981, NEW YORK, US; R.I. ALFARO ET AL.: 'Insect Feeding and Oviposition Deterrents from Western Cedar Foliage'

## Description

L'Invention est relative à des compositions anti-oviposition et à leurs applications à la lutte contre les insectes ravageurs.

Les phéromones anti-oviposition sont des signaux chimiques intra-spécifiques, déposés par certains insectes femelles sur et/ou au voisinage de leur oeufs après la ponte. Les emplacements ainsi marqués sont ensuite rejetés par les autres femelles de la même espèce comme sites de ponte.

Il a donc été proposé d'utiliser l'effet dissuasif de ces phéromones dans la lutte contre les insectes ravageurs.

Parmi les insectes ravageurs qui causent actuellement des dégâts importants, d'où résultent des pertes économiques notables, il convient de citer des insectes appartenant au groupe des lépidoptères tortricidés également dénommés tordeuses ; en particulier, l'un d'entre eux, *Lobesia botrana* Den. et Schiff (Eudemis de la vigne ou Tordeuse de la grappe), est responsable d'importants dégâts dans les vignobles. En conséquence, de nombreuses recherches ont été faites pour lutter contre ces insectes.

Un certains nombre de méthodes basés sur l'utilisation d'agents biologiques ont été proposées (trichogrammes ; microorganismes entomo-pathogènes : *Bacillus thurigensis et Beauveria bassiana*). Il a également été proposé d'utiliser des substances attractives pour détourner les insectes des cultures, ainsi que des phéromones sexuelles de synthèse [DESCOINS et al. C. R. Acad. Sci. 279, 907-910 (1974)].

Actuellement, les méthodes préconisées reposent essentiellement sur l'utilisation d'insecticides. Ces méthodes posent toutefois le problème de la présence de résidus de pesticides dans les fruits et le vin, ainsi quel'accumulation de ces résidus dans l'environnement.

L'existence de phéromones anti-oviposition a été décrite chez de nombreux insectes : pour revue, voir la publication de ROITBERG et PROKOPY, 1 [Bioscience, 37, 400-406 (1987)]. Toutefois, très peu ont pu être effectivement purifiées, et leur nature chimique reste le plus souvent indéterminée.

Quelques composés de ce type ont pu être caractérisés chimiquement ; il s'agit de :
- La phéromone du lépidoptère *Ephestia kuehniella,* qui est constituée d'un mélange de 16 trikétones [MUDD, J. chem. soc. Perkin trans., 1 2357-2362 (1983)], qui est présente dans les glandes mandibulaires de la larve de ce lépidoptère, et qui exerce aussi un effet attractant sur son parasite, *Venturia canescens ;*
- La phéromone anti-oviposition du diptère *Rhagoletis cerasi,* qui est un dérivé de palmityl glucopyranoside ; la synthèse des quatre stéréo-isomères possibles de ce dérivé a été -effectuée [ERNST et WAGNER, Helv. Chim. Acta, 72, 165-171, (1989)], afin de déterminer lequel correspondait à la forme naturelle active de la phéromone.

  Auparavant, il avait été montré qu'une préparation partiellement purifiée de cette phéromone obtenue à partir des sécrétions recueillies aux sites de ponte, réduisait de 90% l'infestation des plantes par *R. cerasi* [KATSOYANNOS et BOLLER, Z. Ange. Entomol., 89, 278-281 (1980)].
- Une publication de D. THIERY [(NATURWISSENSCHATEN 78, 132-133 (1991)] décrit une phéromone anti-oviposition, active sur la pyrale du mais, obtenue à partir d'un extrait méthanolique des oeufs de cet insecte, et la Demande de Brevet Français n° 90 10253, publiée sous le numéro 2 665 610 au nom de l'INSTITUT NATIONAL DE LA RECHERCHE AGRONOMIQUE et du CENTRE NATIONAL DE LA RECHERCHE SCIENTIFIQUE (Inventeur : D. THIERY) a pour objet une composition qui comprend un mélange des esters méthyliques des acides palmitoléique, palmitique, linoléique, oléique et stéarique, et qui reproduit l'activité de ladite phéromone.
- L'heptacosane et ses méthyl-esters, ainsi que des acides gras et des triglycérides, ont été identifiés comme substance anti-oviposition chez le charançon [OSHIMA, Shokubutsu Boeki, 29 (2), 61-63 (1975)] ;
- Certains acides gras insaturés ont été décrits comme dotés de propriétés anti-oviposition vis-à-vis des moustiques [(HWANG et al., J. Chem. Ecol., 10(1), 145-151 (1984)].

L'existence et l'efficacité de phéromones anti-oviposition a été également mise en évidence chez d'autres insectes, mais leur composition chimique n'a pas été déterminée. Par exemple, KLIJNSTRA [Entomol. Exp. Appl., 41, 139-146, (1986)] a montré qu'une solution méthanolique obtenue par lavage des oeufs de *Pieris brassicae* réduisait significativement la ponte des femelles de cette espèce sur les plantes traitées avec ladite solution.

Il apparaît clairement que, quel que puisse être l'intérêt potentiel des phéromones anti-oviposition dans la lutte contre les insectes ravageurs, leur application effective n'est envisageable que s'il est possible de les synthétiser chimiquement, afin de les obtenir en quantité suffisante.

D'autre part, jusqu'à présent, l'existence d'une phéromone anti-oviposition associée aux pontes de l'Eudemis de la vigne n'avait pas été démontrée.

EP 0 592 577 B1

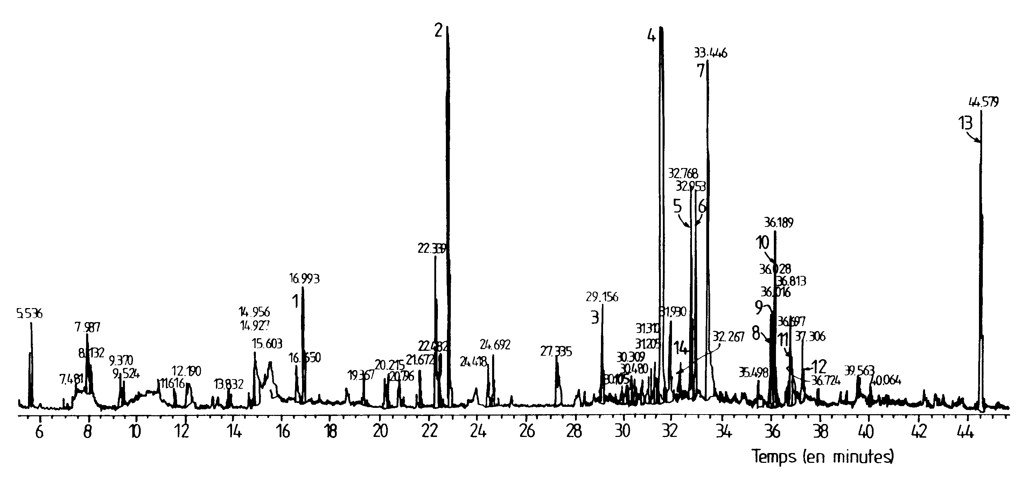

Or, les Inventeurs ont maintenant mis en évidence la présence d'une telle phéromone dans un extrait d'oeufs de l'Eudémis de la vigne. L'analyse de l'extrait ainsi obtenu a révélé qu'il s'agissait d'un mélange complexe, comme le montre le chromatogramme de la figure 1.

Les Inventeurs sont cependant parvenus à sélectionner et identifier dans ce mélange, des constituants qui sont responsables de l'activité anti-oviposition, ce qui permet la formulation de compositions simples reproduisant l'effet, sur la réduction de la ponte de l'Eudemis de la vigne, et d'autres lépidoptères tortricidés, de la phéromone anti-oviposition extraite des oeufs.

La présente Invention a pour objet l'utilisation de compositions comprenant un mélange d'au moins un acide gras non estérifié en $C_{12-20}$, et d'au moins un ester d'alkyle en $C_{1-3}$ et d'acide gras en $C_{14-20}$, comme compositions anti-oviposition actives en particulier sur les lépidoptères tortricidés.

Selon un mode de réalisation de l'Invention, on utilise, en tant que principe actif, au moins un acide gras non estérifié en $C_{14-18}$, et au moins un ester méthylique d'un acide gras en $C_{16-18}$.

Selon une disposition particulièrement avantageuse de ce mode de réalisation, l'acide gras non estérifié est choisi dans le groupe qui comprend l'acide myristique, l'acide stéarique, et l'acide palmitique, et l'ester méthylique d'acide gras est choisi parmi le groupe qui comprend : le palmitoléate de méthyle, le palmitate de méthyle, le linoléate de méthyle, le linolénate de méthyle, l'oléate de méthyle, le stéarate de méthyle, ainsi que leurs mélanges.

Selon une modalité préférée de cette disposition, une composition anti-oviposition conforme à l'Invention comprend, pour une partie de palmitoléate de méthyle, entre 4 et 10 parties de palmitate de méthyle, entre 2 et 5 parties de linoléate de méthyle, entre 2 et 5 parties de linolénate de méthyle, entre 4 et 10 parties d'oléate de méthyle, entre 2 et 5 parties de stéarate de méthyle, entre 2 et 5 parties d'acide myristique, entre 10 et 30 parties d'acide palmitique, entre 2 et 5 parties d'acide stéarique.

Selon une autre modalité préférée de cette disposition, ladite composition comprend au moins 10 ng/ml d'acide myristique, 10 ng/ml d'acide stéarique, 50 ng/ml d'acide palmitique, 5 ng/ml de palmitoléate de méthyle, 20 ng/ml de palmitate de méthyle, 10 ng/ml de linoléate de méthyle, 10 ng/ml de linolénate de méthyle, 20 ng/ml d'oléate de méthyle, 10 ng/ml de stéarate de méthyle.

De manière avantageuse, une composition conforme à l'Invention comprend : entre 20 et 30 ng/ml d'acide myristique, entre 15 et 25 ng/ml d'acide stéarique, entre 100 et 150 ng/ml d'acide palmitique, entre 5 et 10 ng/ml de palmitoléate de méthyle, entre 30 et 80 ng/ml de palmitate de méthyle, entre 20 et 30 ng/ml de linoléate de méthyle, entre 15 et 25 ng/ml de linolénate de méthyle, entre 30 et 80 ng/ml d'oléate de méthyle, entre 25 et 35 ng/ml de stéarate de méthyle.

Les Inventeurs ont testé ces compositions, non seulement sur la tordeuse de la vigne, mais également sur d'autres espèces de tordeuses, en particulier la tordeuse orientale du pêcher, la carpocapse des pommes, et la cochylis, et ont constaté qu'elles étaient actives sur toutes ces espèces.

En outre, les Inventeurs ont également constaté que, de façon surprenante, l'association d'un extrait de tanaisie obtenu par distillation des fleurs à la vapeur d'eau, et plus particulièrement de certains dérivés terpéniques présents dans cet extrait de tanaisie, aux compositions anti-oviposition définies ci-dessus augmente considérablement l'activité de celles-ci.

L' obtention d'un tel extrait de tanaisie est décrite dans la Demande de Brevet Français C.N.R.S.-I.N.R.A. n° 91 08173, dans laquelle les Inventeurs ont mis en évidence l'effet attractif dudit extrait sur les femelles de lépidoptères tortricidés.

En conséquence, selon un mode de réalisation préféré des compositions conformes à l'invention, celles ci comprennent un composant A, lequel est une composition telle que définie ci-dessus, comprenant au moins un acide gras et/ou au moins un alkylester d'acide gras, associé à un composant B comprenant au moins un monoterpène présent dans un extrait obtenu par distillation de fleurs de tanaisie à la vapeur d'eau.

Selon une disposition préférée de ce mode de réalisation, le composant B comprend au moins un monoterpène choisi dans le groupe qui comprend l'$\alpha$-thujone, la $\beta$-thujone et l'$\alpha$-pinène.

Selon une modalité préférée de cette disposition, une composition conforme à l'Invention comprend, pour une partie de palmitoléate de méthyle, entre 4 et 10 parties de palmitate de méthyle, entre 2 et 5 parties de linoléate de méthyle, entre 2 et 5 parties de linolénate de méthyle, entre 4 et 10 parties d'oléate de méthyle, entre 2 et 5 parties de stéarate de méthyle, entre 2 et 5 parties d'acide myristique, entre 10 et 30 parties d'acide palmitique, entre 2 et 5 parties d'acide stéarique, entre $10^2$ et $10^6$ parties d'$\alpha$-thujone, entre 10 et $10^4$ parties de $\beta$-thujone et entre $10^2$ et $10^6$ parties d'$\alpha$-pinène.

Avantageusement, le composant A comprend au moins 10 ng/ml d'acide myristique, 10 ng/ml d'acide stéarique, 50 ng/ml d'acide palmitique, 5 ng/ml de palmitoléate de méthyle, 20 ng/ml de palmitate de méthyle, 10 ng/ml de linoléate de méthyle, 10 ng/ml de linolénate de méthyle, 20 ng/ml d'oléate de méthyle, 10 ng/ml de stéarate de méthyle, et le composant B comprend au moins 10 mg/ml de $\beta$-thujone, 1

4

mg/ml d'α-thujone et 10 mg/ml d'α-pinène.

De manière préférée, le composant A comprend entre 20 et 30 ng/ml d'acide myristique, entre 15 et 25 ng/ml d'acide stéarique, entre 100 et 150 ng/ml d'acide palmitique, entre 5 et 10 ng/ml de palmitoléate de méthyle, entre 30 et 80 ng/ml de palmitate de méthyle, entre 20 et 30 ng/ml de linoléate de méthyle, entre 15 et 25 ng/ml de linolénate de méthyle, entre 30 et 80 ng/ml d'oléate de méthyle, entre 25 et 35 ng/ml de stéarate de méthyle, et le composant B comprend entre 15 et 100 mg/ml de β-thujone, entre 1 et 10 mg/ml d'α-thujone, entre 15 et 100 mg/ml d'α-pinène.

Les compositions anti-oviposition conformes à l'Invention peuvent être obtenues de manière simple et peu coûteuse, à partir d'acides gras, de leurs esters alkyliques, et de monoterpènes qui sont facilement disponibles dans le commerce. Elles peuvent donc être utilisées à grande échelle, dans le traitement des cultures.

La présente Invention a donc également pour objet l'application de compositions telles que définies plus haut, à la protection des plantes contre les Lépidoptères tortricidés, particulièrement l'Eudemis de la vigne.

En particulier, la présente Invention a pour objet un procédé de protection des plantes contre les Lépidoptères tortricidés, lequel procédé est caractérisé en ce que l'on met en contact les plantes à traiter avec une composition conforme à l'Invention.

Selon un mode de réalisation préféré de ce procédé, le composant A est appliqué seul.

Selon un autre mode de réalisation préféré de ce procédé le composant A et le composant B sont appliqués simultanément.

Selon encore un autre mode de réalisation préféré de ce procédé, le composant A et le composant B sont appliqués successivement.

La présente Invention sera mieux comprise à l'aide du complément de description qui va suivre, qui se réfère à des exemples de préparation et d'utilisation des compositions conformes à l'Invention. Il va de soi toutefois que ces exemples sont donnés uniquement à titre d'illustration de l'objet de l'Invention dont ils ne constituent en aucune manière une limitation.

## EXEMPLE 1 : OBTENTION D'UNE PREPARATION DE PHEROMONE ANTI-OVIPOSITION A PARTIR DE PONTES DE L'EUDEMIS DE LA VIGNE

Des femelles de *Lobesia botran*a sont incitées à pondre sur un substrat inerte chimiquement (tubes de verre). 21363 oeufs ont été obtenus de la sorte. Les tubes contenant les oeufs sont rincés chacun avec 2 ml de méthanol froid (pureté > 99,9%) ; le méthanol est laissé au contact des oeufs pendant 12 heures. L'extrait obtenu (200 ml) a ensuite été concentré à froid, sous flux d'azote purifié, jusqu'à obtention des concentrations désirées (exprimées en équivalents oeuf/μl.

Les différentes concentrations utilisées par la suite sont obtenues par dilution de l'extrait ainsi concentré.

## EXEMPLE 2. - CARACTERISATION CHIMIOUE DE LA PREPARATION DE PHEROMONE ANTI-OVIPOSITION

L'extrait obtenu dans l'exemple 1 a été analysé.

### 1/ Chromatographie en phase gazeuse

Les caractéristiques de l'appareillage utilisé sont les suivantes : injecteur "on colon", colonne capillaire, longueur 25 m, diamètre interne 0,2 mm, phase Ultra 1 (HEWLETT PACKARD)
- La température initiale est augmentée de la façon suivante : 2 minutes à 60°C, puis augmentation linéaire, de 5°C par minute jusqu'à 250°C, puis 20 minutes à 250°C.

La figure 1 représente le profil chromatographique obtenu.

Le dosage des constituants a été obtenu par chromatographie en phase gazeuse (calcul des surfaces des pics et comparaison avec un étalon interne injecté simultanément).

### 2/ Spectrométrie de masse

Les composants sélectionnés ont été identifiés par spectrométrie de masse (comparaison avec des spectres de référence, et comparaison des temps de rétention avec ceux de composés standard.

EP 0 592 577 B1

Le tableau I ci-dessous donne la liste de ces composants avec les numéros de pics correspondants, le temps de rétention et le poids moléculaire, ainsi que les quantités dosées.

TABLEAU 1

| N° de PIC | MOLECULES | CONCENTRATION $\mu$g/ml EXTRAIT | CONCENTRATION $\mu$g/OEUF | TEMPS DE RETENTIO-N (min) | POIDS MOL. |
|---|---|---|---|---|---|
| 3 | Acide myristique | 0,0258 | 0,000258 | 29,156 | 228 |
| 5 | Palmitate de méthyle | 0,0586 | 0,000586 | 32,768 | 270 |
| 7 | Acide palmitique | 0,1373 | 0,001373 | 33,446 | 256 |
| 8 | Linoléate de méthyle | 0,0225 | 0,000225 | 36,016 | 294 |
| 9 | Linolénate de méthyle | 0,018 | 0,00018 | 36,089 | 292 |
| 10 | Oléate de méthyle | 0,061 | 0,00061 | 36,189 | 296 |
| 11 | Stéarate de méthyle | 0,029 | 0,00029 | 36,897 | 298 |
| 12 | Acide Stéarique | 0,018 | 0,00018 | 37,306 | 284 |
| 14 | Palmitoléate de méthyle | 0,0078 | 0,000078 | 32,267 | 268 |

## EXEMPLE 3. - PREPARATION DE COMPOSITIONS ANTI-OVIPOSITION CONFORMES A L'INVENTION

### 1) Composition I (ODP):

De l'acide myristique, de l'acide stéarique, de l'acide palmitique, du palmitoléate de méthyle, du palmitate de méthyle, du linoléate de méthyle, du linolénate de méthyle, de l'oléate de méthyle, et du stéarate de méthyle (SIGMA) sont mélangés dans les proportions indiquées dans le tableau I ci-dessus. Le mélange est dissous dans du méthanol

### 2) Composition II :

Du $\beta$-thujone, et de l'$\alpha$-thujone, seuls, ou associés avec du $\beta$-pinène (SIGMA) sont mélangés avec la composition I dans les proportions indiquées dans le tableau II ci-dessous. Le mélange est dissous dans du méthanol.

TABLEAU II

| | ODP | ODP + Thu + Pin | ODP + Thu |
|---|---|---|---|
| Acide myristique | 0,0052 | 0,0052 | 0,0052 |
| Palmitate de méthyle | 0,0117 | 0,0117 | 0,0117 |
| Acide palmitique | 0,0274 | 0,0274 | 0,0274 |
| Linoléate de méthyle | 0,0044 | 0,0044 | 0,0044 |
| Linolénate de méthyle | 0,0036 | 0,0036 | 0,0036 |
| Oléate de méthyle | 0,0122 | 0,0122 | 0,0122 |
| Stéarate de méthyle | 0,0058 | 0,0058 | 0,0058 |
| Acide stéarique | 0,0036 | 0,0036 | 0,0036 |
| Palmitoléate de méthyle | 0,0016 | 0,0016 | 0,0016 |
| Beta thujone | $0,9.10^5$ | $0,9.10^5$ | $0,9.10^5$ |
| Alpha thujone | $8.10^3$ | $8.10^3$ | $8.10^3$ |
| Alpha pinène | $1.10^5$ | $1.10^5$ | $1.10^5$ |

Les quantités en acides ou esters et en terpènes sont exprimées en $10^{-9}$ g/dépôt.

6

**EXEMPLE 4. - COMPARAISON DE L'EFFICACITE DES COMPOSITIONS ANTI-OVIPOSITION CONFORMES A L'INVENTION ET DE LA PREPARATION DE PHEROMONE ANTI-OVIPOSITION SUR LA REDUCTION DE LA PONTE DE L'EUDEMIS DE LA VIGNE**

L'étude du comportement de ponte a été effectuée dans des cages en altuglas dans lesquelles a été déposé un substrat d'oviposition permettant la ponte, constitué par une feuille de papier bristol (10,7 x 13,6 cm).

Sur chaque feuille de bristol ont été effectués 32 dépôts, de 5 $\mu$l chacun, de la solution à tester (extrait d'oeufs préparé selon la procédure décrite à l'exemple 1, compositions préparées selon la procédure décrite à l'exemple 3, ou solvant seul) à la concentration voulue ; les dépôts sont espacés de 2,1 cm et ont un diamètre de 1,1 cm.

Dans le cas de l'extrait d'oeufs, les concentrations utilisées sont exprimées en équivalents oeufs/$\mu$l, (ee/$\mu$l) et sont de 0 (solvant seul), 0,6 et 4 (soit 3 et 20 équivalents oeufs par dépôt).

Des supports témoins, non traités, ont également été utilisés .

Les supports d'oviposition ont été placés dans les cages. 10 femelles âgées de 2 jours ont été laissées en présence des supports, pendant 1 nuit, à l'issue de laquelle le nombre et la disposition des oeufs déposés sur les zones traitées et sur les zones non traitées ont été notés

D'autre part, 24 heures après chaque expérience, les femelles sont placées dans des tubes de verre, afin de contrôler leur ponte ; les oeufs pondus par chaque femelle sont comptés.

A l'issue de l'expérimentation, on détermine l'indice anti-oviposition (Di), calculé en tenant compte du rapport entre l'aire non traitée et l'aire traitée, la superficie de la première étant le triple de celle de la seconde.

$$Di = (3A - B)/(3A + B) \times 100 ;$$

A représente le nombre moyen d'oeufs déposés ( 10 expériences) sur l'aire traitée, et B sur l'aire non traitée. Di varie de 0 % (pas de dissuasion) à 100 % dissuasion totale.

La moyenne des indices obtenus pour chaque répétition est comparée entre les différents types de traitement.

Les résultats sont les suivants :
- Dans le cas du support témoin (bristol sans traitement), Di = 0,06%, ce qui indique que les dépôts d'oeufs sont régulièrement répartis sur toute la superficie du support de ponte ; une répartition similaire est observée dans le cas du support traité au méthanol.
- En ce qui concerne l'extrait d'oeufs : A la dose de 3 équivalents oeufs par dépôt, Di = 15,51%, ce qui indique que les femelles déposent de préférence leurs oeufs sur des zones non traitées ; cet effet apparaît comme étant dose-dépendant, car il est encore augmenté à la dose de 20 équivalents oeufs par dépôt (Di = 50,28%).

Les résultats de la comparaison entre les compositions sans monoterpènes, et les compositions comprenant des monoterpènes sont présentés dans les Tableaux III et IV suivants :

TABLEAU III : Dissuasion de la ponte obtenue chez la tordeuse de la grappe lors d'une exposition à différents traitements. Sd = écart type.

Les lettres entre parenthèses indiquent des différences statistiques avec une probabilité > 99 %.

TABLEAU III

| Traitement | Nb femelles | Nb oeufs | $\Delta t \pm Sd$ (en %) |
|---|---|---|---|
| Contrôle (solvant seul) | 133 | 4967 | 0,91 ± 3,65 (a) |
| ODP | 60 | 2176 | 54,79 ± 4,57 (b) |
| ODP + Thu | 44 | 1065 | 57,90 ± 1,74 (c) |
| ODP + Thu + Pin | 60 | 1407 | 60,75 ± 3,14 (c) |

TABLEAU IV : Nombre moyen d'oeufs déposés par femelle lors de l'exposition aux différents traitements proposés, et réduction du nombre d'oeufs par rapport au contrôle. Sd = écart type

TABLEAU IV

| Traitement | Nb d'oeuf par femelle ± Sd | Réduction (%) |
|---|---|---|
| Contrôle (solvant seul) | 38,91 ± 7,98 | |
| Extrait d'oeufs (20 ee) | 41,2 ± 4,84 | |
| ODP | 36,27 ± 4,17 | 6,8 % |
| ODP + Thu | 24,70 ± 6,28 | 36,6 % |
| ODP + Thu + Pin | 23,45 ± 10,98 | 39,7 %. |

CONCLUSION

- Le nombre total d'oeufs déposés par les femelles sur les supports n'est pas affecté de façon significative par les traitements par l'extrait d'oeufs et par la composition ODP. Toutefois, 24 heures après l'expérimentation, on observe une diminution de la ponte chez les femelles qui ont été mises en présence de l'extrait ou de la composition.

L'addition de monoterpènes à la formulation synthétique ODP:

(1) augmente l'effet dissuasif (incite les femelles à pondre sur les zones non traitées).

(2) réduit de plus de 35 % le nombre d'oeufs pondus par jour et par femelle.

**Revendications**

1. Utilisation d'une composition comprenant en tant que principe actif, au moins un acide gras non estérifié en $C_{12-20}$, et au moins un ester d'alkyle en $C_{1-3}$ et d'acide gras en $C_{14-20}$ en tant que composition anti-oviposition active sur les lépidoptères tortricidés.

2. Utilisation selon la revendication 1, caractérisée en ce que ladite composition comprend, en tant que principe actif, au moins un acide gras non estérifié en $C_{14-18}$, et au moins un ester méthylique d'un acide gras en $C_{16-18}$.

3. Utilisation selon la revendication 2, caractérisée en ce que l'acide gras non estérifié est choisi dans le groupe qui comprend l'acide myristique, l'acide stéarique, et l'acide palmitique, et l'ester méthylique d'acide gras est choisi parmi le groupe qui comprend : le palmitoléate de méthyle, le palmitate de méthyle, le linoléate de méthyle, le linolénate de méthyle, l'oléate de méthyle, le stéarate de méthyle, ainsi que leurs mélanges.

4. Composition anti-oviposition caractérisée en ce qu'elle comprend pour une partie de palmitoléate de méthyle, entre 4 et 10 parties de palmitate de méthyle, entre 2 et 5 parties de linoléate de méthyle, entre 2 et 5 parties de linolénate de méthyle, entre 4 et 10 parties d'oléate de méthyle, entre 2 et 5 parties de stéarate de méthyle, entre 2 et 5 parties d'acide myristique, entre 10 et 30 parties d'acide palmitique, entre 2 et 5 parties d'acide stéarique.

5. Composition anti-oviposition selon la revendication 4, caractérisée en ce qu'elle comprend au moins 10 ng/ml d'acide myristique, 10 ng/ml d'acide stéarique, 50 ng/ml d'acide palmitique, 5 ng/ml de palmitoléate de méthyle, 20 ng/ml de palmitate de méthyle, 10 ng/ml de linoléate de méthyle, 10 ng/ml de linolénate de méthyle, 20 ng/ml d'oléate de méthyle, 10 ng/ml de stéarate de méthyle

6. Composition anti-oviposition selon la Revendication 5, caractérisée en ce qu'elle comprend : entre 20 et 30 ng/ml d'acide myristique, entre 15 et 25 ng/ml d'acide stéarique, entre 100 et 150 ng/ml d'acide palmitique, entre 5 et 10 ng/ml de palmitoléate de méthyle, entre 30 et 80 ng/ml de palmitate de méthyle, entre 20 et 30 ng/ml de linoléate de méthyle, entre 15 et 25 ng/ml de linolénate de méthyle, entre 30 et 80 ng/ml d'oléate de méthyle, entre 25 et 35 ng/ml de stéarate de méthyle

7. Composition anti-oviposition, caractérisée en ce qu'elle comprend un composant A, lequel est constitué par une composition tel que défini dans l'une quelconque des revendications 1 à 6, associé à un composant B comprenant au moins un monoterpène présent dans un extrait obtenu par distillation à la vapeur d'eau de fleurs de tanaisie.

8. Composition selon la Revendication 7, caractérisée en ce que ledit monoterpène est choisi dans le groupe comprenant l'$\alpha$-thujone, la $\beta$-thujone et l'$\alpha$-pinène.

9. Composition selon la Revendication 8, caractérisée en ce qu'elle comprend, pour une partie de palmitoléate de méthyle, entre 4 et 10 parties de palmitate de méthyle, entre 2 et 5 parties de linoléate de méthyle, entre 2 et 5 parties de linolénate de méthyle, entre 4 et 10 parties d'oléate de méthyle, entre 2 et 5 parties de stéarate de méthyle, entre 2 et 5 parties d'acide myristique, entre 10 et 30 parties d'acide palmitique, entre 2 et 5 parties d'acide stéarique, entre $10^2$ et $10^6$ parties d'$\alpha$-thujone, entre 10 et $10^4$ parties de $\beta$-thujone et entre $10^2$ et $10^6$ parties d'$\alpha$-pinène.

10. Composition selon la Revendication 9, caractérisée en ce que le composant A comprend au moins 10 ng/ml d'acide myristique, 10 ng/ml d'acide stéarique, 50 ng/ml d'acide palmitique, 5 ng/ml de palmitoléate de méthyle, 20 ng/ml de palmitate de méthyle, 10 ng/ml de linoléate de méthyle, 10 ng/ml de linolénate de méthyle, 20 ng/ml d'oléate de méthyle, 10 ng/ml de stéarate de méthyle, et le composant B comprend 10 mg/ml de $\beta$-thujone, 1 mg/ml d'$\alpha$-thujone et 10 mg/ml d'$\alpha$-pinène.

11. Composition selon la Revendication 10, caractérisée en ce que le composant A comprend entre 20 et 30 ng/ml d'acide myristique, entre 15 et 25 ng/ml d'acide stéarique, entre 100 et 150 ng/ml d'acide palmitique, entre 5 et 10 ng/ml de palmitoléate de méthyle, entre 30 et 80 ng/ml de palmitate de méthyle, entre 20 et 30 ng/ml de linoléate de méthyle, entre 15 et 25 ng/ml de linolénate de méthyle, entre 30 et 80 ng/ml d'oléate de méthyle, entre 25 et 35 ng/ml de stéarate de méthyle, et le composant B comprend entre 15 et 100 mg/ml de $\beta$-thujone, entre 2 et 10 mg/ml d'$\alpha$-thujone, entre 15 et 100 mg/ml d'$\alpha$-pinène.

12. Utilisation d'une composition anti-oviposition, telle que définie dans l'une quelconque des Revendications 1 à 11, pour la protection des plantes contre les Lépidoptères tortricidés.

13. Procédé de protection des plantes contre les Lépidoptères tortricidés, caractérisé en ce que l'on met en contact les plantes à traiter avec une composition anti-oviposition telle que définie dans l'une quelconque des Revendications 1 à 11.

14. Procédé de protection des plantes contre les lépidoptères tortricidés, lequel procédé est caractérisé en ce que l'on met en contact les plantes à traiter avec le composant A et le composant B d'une composition anti-oviposition, selon l'une quelconque des Revendications 7 à 11.

15. Procédé selon la Revendication 14, caractérisée en ce qu'on applique simultanément le composant A et le composant B sur les plantes à traiter.

16. Procédé selon la Revendication 14, caractérisée en ce qu'on applique successivement le composant A et le composant B sur les plantes à traiter.

**Claims**

1. Use of a composition comprising as active principle at least one unesterified $C_{12-20}$ fatty acid and at least one $C_{1-3}$ alkyl ester of a $C_{14-20}$ fatty acid, as an oviposition-deterring composition which is active against tortricid lepidoptera.

2. Use according to Claim 1, characterized in that the said composition comprises as active principle at least one unesterified $C_{14-18}$ fatty acid and at least one methyl ester of a $C_{16-18}$ fatty acid.

3. Use according to Claim 2, characterized in that the unesterified fatty acid is chosen from the group comprising myristic acid, stearic acid and palmitic acid, and the fatty acid methyl ester is chosen from the group comprising methyl palmitoleate, methyl palmitate, methyl linoleate, methyl linolenate, methyl oleate and methyl stearate, as well as mixtures thereof.

4. Oviposition-deterring composition, characterized in that it comprises, for one part of methyl palmitoleate, between 4 and 10 parts of methyl palmitate, between 2 and 5 parts of methyl linoleate, between 2 and 5 parts of methyl linolenate, between 4 and 10 parts of methyl oleate, between 2 and 5 parts of methyl stearate, between 2 and 5 parts of myristic acid, between 10 and 30 parts of palmitic acid and between 2 and 5 parts of stearic acid.

5. Oviposition-deterring composition according to Claim 4, characterized in that it comprises at least 10 ng/ml of myristic acid, 10 ng/ml of stearic acid, 50 ng/ml of palmitic acid, 5 ng/ml of methyl palmitoleate, 20 ng/ml of methyl palmitate, 10 ng/ml of methyl linoleate, 10 ng/ml of methyl linolenate, 20 ng/ml of methyl oleate and 10 ng/ml of methyl stearate.

6. Oviposition-deterring composition according to Claim 5, characterized in that it comprises between 20 and 30 ng/ml of myristic acid, between 15 and 25 ng/ml of stearic acid, between 100 and 150 ng/ml of palmitic acid, between 5 and 10 ng/ml of methyl palmitoleate, between 30 and 80 ng/ml of methyl palmitate, between 20 and 30 ng/ml of methyl linoleate, between 15 and 25 ng/ml of methyl linolenate, between 30 and 80 ng/ml of methyl oleate and between 25 and 35 ng/ml of methyl stearate.

7. Oviposition-deterring composition, characterized in that it comprises a component A, which consists of a composition as defined in any one of Claims 1 to 6, combined with a component B comprising at least one monoterpene present in an extract obtained by steam distillation of tansy flowers.

8. Composition according to Claim 7, characterized in that the said monoterpene is chosen from the group comprising $\alpha$-thujone, $\beta$-thujone and $\alpha$-pinene.

9. Composition according to Claim 8, characterized in that it comprises, for one part of methyl palmitoleate, between 4 and 10 parts of methyl palmitate, between 2 and 5 parts of methyl linoleate, between 2 and 5 parts of methyl linolenate, between 4 and 10 parts of methyl oleate, between 2 and 5 parts of methyl stearate, between 2 and 5 parts of myristic acid, between 10 and 30 parts of palmitic acid, between 2 and 5 parts of stearic acid, between $10^2$ and $10^6$ parts of $\alpha$-thujone, between 10 and $10^4$ parts of $\beta$-thujone and between $10^2$ and $10^6$ parts of $\alpha$-pinene.

10. Composition according to Claim 9, characterized in that the component A comprises at least 10 ng/ml of myristic acid, 10 ng/ml of stearic acid, 50 ng/ml of palmitic acid, 5 ng/ml of methyl palmitoleate, 20 ng/ml of methyl palmitate, 10 ng/ml of methyl linoleate, 10 ng/ml of methyl linolenate, 20 ng/ml of methyl oleate and 10 ng/ml of methyl stearate, and the component B comprises 10 mg/ml of $\beta$-thujone, 1 mg/ml of $\alpha$-thujone and 10 mg/ml of $\alpha$-pinene.

**11.** Composition according to Claim 10, characterized in that the component A comprises between 20 and 30 ng/ml of myristic acid, between 15 and 25 ng/ml of stearic acid, between 100 and 150 ng/ml of palmitic acid, between 5 and 10 ng/ml of methyl palmitoleate, between 30 and 80 ng/ml of methyl palmitate, between 20 and 30 ng/ml of methyl linoleate, between 15 and 25 ng/ml of methyl linolenate, between 30 and 80 ng/ml of methyl oleate and between 25 and 35 ng/ml of methyl stearate, and the component B comprises between 15 and 100 mg/ml of $\beta$-thujone, between 2 and 10 mg/ml of $\alpha$-thujone and between 15 and 100 mg/ml of $\alpha$-pinene.

**12.** Use of an oviposition-deterring composition as defined in any one of Claims 1 to 11 for protecting plants against tortricid lepidoptera.

**13.** Process for protecting plants against tortricid lepidoptera, characterized in that the plants to be treated are brought into contact with an oviposition-deterring composition as defined in any one of Claims 1 to 11.

**14.** Process for protecting plants against tortricid lepidoptera, which process is characterized in that the plants to be treated are brought into contact with the component A and the component B of an oviposition-deterring composition according to any one of Claims 7 to 11.

**15.** Process according to Claim 14, characterized in that the component A and the component B are applied simultaneously to the plants to be treated.

**16.** Process according to Claim 14, characterized in that the component A and the component B are applied successively to the plants to be treated.

**Patentansprüche**

**1.** Verwendung einer Zusammensetzung, die als Wirkstoff mindestens eine nicht-veresterte $C_{12-20}$-Fettsäure und mindestens einen $C_{1-3}$-Alkylester einer $C_{14-20}$-Fettsäure enthält, als eine Zusammensetzung, die die Eiablage bei Blattwickler-Lepidopteren verhindert.

**2.** Verwendung nach Anspruch 1, dadurch **gekennzeichnet,** daß die Zusammensetzung als Wirkstoff mindestens eine nicht-veresterte $C_{14-18}$-Fettsäure und mindestens einen Methylester einer $C_{16-18}$-Fettsäure enthält.

**3.** Verwendung nach Anspruch 2, dadurch **gekennzeichnet,** daß die nicht-veresterte Fettsäure aus der Gruppe, bestehend aus Myristinsäure, Stearinsäure und Palmitinsäure ausgewählt ist, und der Fettsäuremethylester aus der Gruppe, bestehend aus Methylpalmitoleat, Methylpalmitat, Methyllinoleat, Methyllinolenat, Methyloleat, Methylstearat sowie ihren Gemischen ausgewählt ist.

**4.** Zusammensetzung zur Verhinderung der Eiablage, dadurch **gekennzeichnet,** daß sie als Methylpalmitoleat-Anteil zwischen 4 bis 10 Teile Methylpalmitat, zwischen 2 und 5 Teile Methyllinoleat, zwischen 2 und 5 Teile Methyllinolenat, zwischen 4 und 10 Teile Methyloleat, zwischen 2 und 5 Teile Methylstearat, zwischen 2 und 5 Teile Myristinsäure, zwischen 10 und 30 Teile Palmitinsäure, zwischen 2 und 5 Teile Stearinsäure enthält.

**5.** Zusammensetzung zur Verhinderung der Eiablage nach Anspruch 4, dadurch **gekennzeichnet,** daß sie mindestens 10 ng/ml Myristinsäure, 10 ng/ml Stearinsäure, 50 ng/ml Palmitinsäure, 5 ng/ml Methylpalmitoleat, 20 ng/ml Methylpalmitat, 10 ng/ml Methyllinoleat, 10 ng/ml Methyllinolenat, 20 ng/ml Methyloleat, 10 ng/ml Methylstearat enthält.

**6.** Zusammensetzung zur Verhinderung der Eiablage nach Anspruch 5, dadurch **gekennzeichnet,** daß sie zwischen 20 und 30 ng/ml Myristinsäure, zwischen 15 und 25 ng/ml Stearinsäure, zwischen 100 und 150 ng/ml Palmitinsäure, zwischen 5 und 10 ng/ml Methylpalmitoleat, zwischen 30 und 80 ng/ml Methylpalmitat, zwischen 20 und 30 ng/ml Methyllinoleat, zwischen 15 und 25 ng/ml Methyllinolenat, zwischen 30 und 80 ng/ml Methyloleat, zwischen 25 und 35 ng/ml Methylstearat enthält.

7. Zusammensetzung zur Verhinderung der Eiablage, dadurch **gekennzeichnet,** daß sie einen Bestandteil A, der aus der Zusammensetzung wie sie in einem der Ansprüche 1 bis 6 definiert ist besteht, in Verbindung mit einem Bestandteil B enthält, der mindestens ein Monoterpen, das in einem durch Wasserdampfdestillation von Tanacetum-Blüten erhaltenen Extrakt enthalten ist, enthält.

8. Zusammensetzung nach Anspruch 7, dadurch **gekennzeichnet,** daß das Monoterpen aus der Gruppe, umfassend $\alpha$-Thujon, $\beta$-Thujon und $\alpha$-Pinen, ausgewählt ist.

9. Zusammensetzung nach Anspruch 8, dadurch **gekennzeichnet,** daß sie als Methylpalmitoleat-Anteil zwischen 4 und 10 Teile Methylpalmitat, zwischen 2 und 5 Teile Methyllinoleat, zwischen 2 und 5 Teile Methyllinolenat, zwischen 4 und 10 Teile Methyloleat, zwischen 2 und 5 Teile Methylstearat, zwischen 2 und 5 Teile Myristinsäure, zwischen 10 und 30 Teile Palmitinsäure, zwischen 2 und 5 Teile Stearinsäure, zwischen $10^2$ und $10^6$ Teile $\alpha$-Thujon, zwischen 10 und $10^4$ Teile $\beta$-Thujon und zwischen $10^2$ und $10^6$ Teile $\alpha$-Pinen enthält.

10. Zusammensetzung nach Anspruch 9, dadurch **gekennzeichnet,** daß der Bestandteil A mindestens 10 ng/ml Myristinsäure, 10 ng/ml Stearinsäure, 50 ng/ml Palmitinsäure, 5 ng/ml Methylpalmitoleat, 20 ng/ml Methylpalmitat, 10 ng/ml Methyllinoleat, 10 ng/ml Methyllinolenat, 20 ng/mg Methyloleat, 10 ng/ml Methylstearat enthält, und der Bestandteil B 10 mg/ml $\beta$-Thujon, 1 mg/ml $\alpha$-Thujon und 10 mg/ml $\alpha$-Pinen enthält.

11. Zusammensetzung nach Anspruch 10, dadurch **gekennzeichnet,** daß der Bestandteil A zwischen 20 und 30 ng/ml Myristinsäure, zwischen 15 und 25 ng/ml Stearinsäure, zwischen 100 und 150 ng/ml Palmitinsäure, zwischen 5 und 10 ng/ml Methylpalmitoleat, zwischen 30 und 80 ng/ml Methylpalmitat, zwischen 20 und 30 ng/ml Methyllinoleat, zwischen 15 und 25 ng/ml Methyllinolenat, zwischen 30 und 80 ng/mg Methyloleat, zwischen 25 und 35 ng/ml Methylstearat enthält, und der Bestandteil B zwischen 15 und 100 mg/ml $\beta$-Thujon, zwischen 2 und 10 mg/ml $\alpha$-Thujon und zwischen 15 und 100 mg/ml $\alpha$-Pinen enthält.

12. Verwendung einer wie in einem der Ansprüche 1 bis 11 definierten Zusammensetzung zum Schutz von Pflanzen gegen Blattwickler-Lepidopteren.

13. Verfahren zum Schutz von Pflanzen gegen Blattwickler-Lepidopteren, dadurch **gekennzeichnet,** daß man die zu behandelnden Pflanzen mit einer Zusammensetzung zur Verhinderung der Eiablage, wie sie in einem der Ansprüche 1 bis 11 definiert ist, in Kontakt bringt.

14. Verfahren zum Schutz von Pflanzen gegen Blattwickler-Lepidopteren, dadurch **gekennzeichnet,** daß man die zu behandelnden Pflanzen mit dem Bestandteil A und dem Bestandteil B einer Zusammensetzung zur Verhinderung der Eiablage nach einem der Ansprüche 7 bis 11 in Kontakt bringt.

15. Verfahren nach Anspruch 14, dadurch **gekennzeichnet,** daß man den Bestandteil A und den Bestandteil B gleichzeitig auf die zu behandelnden Pflanzen aufbringt.

16. Verfahren nach Anspruch 14, dadurch **gekennzeichnet,** daß man den Bestandteil A und den Bestandteil B nacheinander auf die zu behandelnden Pflanzen aufbringt.

EP 0 592 577 B1

Temps (en minutes)